# FASCICULE DE BREVET EUROPEEN

(11) **EP 2 502 359 B1**
(45) Date de publication et mention de la délivrance du brevet: **19.03.2014**
(21) Numéro de dépôt: 10782238.9
(22) Date de dépôt: 16.11.2010
(51) Int. Cl.: H04B 7/155, H04B 7/15

(54) **PROCÉDÉ POUR UN RELAIS ADAPTÉ À FONCTIONNER DANS UN MODE NUMÉRIQUE ET ANALOGIQUE**
VERFAHREN FÜR EIN RELAIS GEEIGNET ZUR DIGITALEN UND ANALOGEN BETRIEBSART.
METHOD FOR A RELAY ADAPTED TO WORK IN A DIGITAL AND AN ANALOG MODE.

(30) Priorité: 17.11.2009 FR 0958110
(43) Date de publication de la demande: 26.09.2012
(73) Titulaire: Detracom, 31200 Toulouse (FR)
(72) Inventeur: HUC, Serge, F-31620 Bouloc (FR); RAFIN, Jérémie, F-31400 Toulouse (FR); FOURTET, Christophe, F-82170 Pompignan (FR)
(74) Mandataire: Ribeiro Dias, Alexandre
(86) Numéro de dépôt international: PCT/EP2010/067530
(87) Numéro de publication internationale: WO 2011/061167

(56) Documents cités:
- EP-A1- 1 624 589
- GB-A- 2 268 368
- US-A- 5 228 074
- US-B1- 6 675 024

## Description

La présente invention appartient au domaine des systèmes professionnels de radiocommunications, et concerne plus particulièrement la gestion de la coexistence de terminaux utilisateurs mettant en oeuvre des protocoles de radiocommunications différents, en particulier des protocoles numérique et analogique.

Par « systèmes professionnels de radiocommunications », on entend, par opposition aux systèmes de téléphonie mobile grand public (GSM, UMTS, CDMA 2000, etc.), les réseaux de télécommunications mobiles privés, généralement mis en oeuvre par des particuliers, des entreprises, des collectivités, des services publics, des administrations, etc. De tels systèmes professionnels de radiocommunications sont parfois connus sous l'acronyme PMR (de l'anglais « Professional Mobile Radio »).

L'utilisation de tels systèmes est ancienne, et remonte à la conception des « talkie-walkies ».

De tels systèmes professionnels de radiocommunications présentent l'avantage, par rapport aux systèmes de téléphonie mobile grand public, de permettre un établissement quasi instantané de communications (contre plus de cinq secondes dans un système de téléphonie mobile grand public, lorsque la communication n'est pas rejetée pour cause de perturbations sur le réseau téléphonique), d'attribuer des priorités aux différents appels et/ou terminaux utilisateurs, d'appeler simultanément des groupes de terminaux utilisateurs, etc. Tous ces avantages font que les systèmes professionnels de radiocommunications demeurent indispensables dans un nombre important de situations, liées notamment à la sécurité civile.

Pendant de nombreuses années, les systèmes professionnels de radiocommunications ont été des systèmes utilisant des protocoles de radiocommunications analogiques. Des exemples de tels protocoles de radiocommunications analogiques sont CCIR, CTCSS, ZVEI, EEA, etc.

On assiste à présent au déploiement de systèmes utilisant des protocoles de radiocommunications numériques pour améliorer les performances, proposer de nouveaux services aux utilisateurs, etc.

Différents protocoles de radiocommunications numériques existent, par exemple TETRA, dPMR, DMR, eDMR (marque déposée), etc.

Toutefois, le déploiement d'un système professionnel de radiocommunications constitue un investissement financier très lourd, car il exige l'installation d'une infrastructure comportant des relais, et exige également de se doter d'un parc de terminaux utilisateurs qui peuvent être des terminaux fixes, embarqués dans un véhicule ou portatifs.

On comprend que, lorsqu'un système analogique a été déployé, celui-ci doive être rentabilisé avant de déployer un nouveau système numérique. Pour les raisons susmentionnées, la transition d'un système analogique vers un système numérique se fera principalement progressivement, de sorte qu'il sera nécessaire de gérer un parc de terminaux utilisateurs comportant à la fois des terminaux analogiques et des terminaux numériques.

Le déploiement d'un nouveau système professionnel de radiocommunications nécessite en outre l'obtention d'une autorisation, délivrée par l'autorité administrative compétente, d'utiliser un ou plusieurs canaux fréquentiels. Les canaux fréquentiels actuellement utilisés se trouvent majoritairement dans des bandes de fréquences aux alentours de 40 mégahertz (MHz), 80 MHz, 160 MHz et 400 MHz. Ces bandes de fréquences sont définies à la fois pour les systèmes analogiques et les systèmes numériques, de sorte qu'il peut s'avérer nécessaire de gérer la coexistence de terminaux numériques et analogiques dans un même canal fréquentiel.

Il est connu, de la demande de brevet N° EP 1 624 589 un relais gérant la coexistence de terminaux analogiques et de terminaux numériques.

Le relais selon la demande de brevet N° EP 1 624 589 effectue en continu et simultanément à la fois une recherche d'activité analogique et une recherche d'activité numérique, et échange simultanément des signaux avec des terminaux numériques et analogiques.

Un tel relais est complexe et nécessite par conséquent une puissance de calcul importante dans la mesure où, pour chaque signal radiofréquences, il est vérifié à la fois si celui-ci a été émis par un terminal analogique et s'il a été émis par un terminal numérique. De plus, un tel relais ne contribue pas à réduire les collisions entre signaux numériques et signaux analogiques.

La présente invention a pour objectif de résoudre tout ou partie des problèmes susmentionnés, et propose à cet effet un relais adapté à fonctionner suivant un mode numérique et un mode analogique, ainsi qu'un procédé de fonctionnement d'un tel relais, afin de gérer la coexistence dans un même canal fréquentiel de terminaux analogiques et de terminaux numériques.

Selon un premier aspect, la présente invention concerne un procédé de fonctionnement d'un relais d'un système professionnel de radiocommunications, ledit relais étant adapté à fonctionner selon deux modes, un mode de fonctionnement numérique, dans lequel ledit relais échange des signaux numériques avec un ou des terminaux numériques, et un mode de fonctionnement analogique dans lequel ledit relais échange des signaux analogiques avec un ou des terminaux analogiques. En outre, le mode de fonctionnement numérique est utilisé par défaut, et le procédé comporte :
- une étape récurrente de recherche d'activité analogique d'au moins un terminal analogique, exécutée lorsque le relais est en mode de fonctionnement numérique,
- une étape de basculement dans le mode de fonctionnement analogique, exécutée lorsqu'une activité analogique a été détectée, le mode de fonctionnement numérique étant interrompu tant que le relais est en mode de fonctionnement analogique,
- une étape de retour au mode de fonctionnement numérique, exécutée lorsqu'un critère de retour est vérifié.

Suivant des modes particuliers de mise en oeuvre, le procédé comporte l'une ou plusieurs des caractéristiques suivantes, prises isolément ou suivant toutes les combinaisons techniquement possibles :
- le critère de retour est vérifié lorsqu'un critère d'inactivité analogique est vérifié et/ou lorsqu'une durée prédéfinie maximale d'interruption du mode de fonctionnement numérique est écoulée,
- au cours de l'étape de basculement, le relais informe les terminaux numériques de l'interruption du mode de fonctionnement numérique;
- le relais interrompt la diffusion d'une voie balise du mode de fonctionnement numérique tant que le relais est en mode de fonctionnement analogique,
- le critère d'inactivité analogique est vérifié lorsqu'aucun signal analogique n'a été détecté pendant une durée prédéfinie maximale d'inactivité analogique,
- la durée prédéfinie maximale d'inactivité analogique se décompose en une première durée, à l'expiration de laquelle le relais interrompt les retransmissions de signaux analogiques, et une seconde durée, à l'expiration de laquelle le relais exécute l'étape de retour au mode de fonctionnement numérique,
- suite à l'exécution de l'étape de retour au mode de fonctionnement numérique, l'exécution de l'étape de recherche d'activité analogique est interrompue pendant une durée prédéfinie minimale d'exécution du mode de fonctionnement numérique,
- le procédé comporte une étape récurrente de recherche d'activité numérique d'au moins un terminal numérique, et on ne considère au cours de l'étape de recherche d'activité analogique que des signaux mesurés dans un ou des intervalles de temps, dits « intervalles de recherche », pour lesquels une activité numérique n'a pas été détectée,
- les terminaux numériques étant multiplexés dans le temps et utilisant des intervalles de temps distincts, dits « slots », l'étape de recherche d'activité numérique est exécutée pour chaque slot,
- au cours de l'étape de recherche d'activité analogique, une activité analogique est recherchée dans des signaux mesurés dans des intervalles de recherche compris dans une fenêtre temporelle glissante, dite « fenêtre de recherche », dont la durée est prédéfinie en fonction de paramètres du mode de fonctionnement analogique,
- la durée de la fenêtre de recherche est adaptée à permettre la détection d'une séquence de cinq tonalités suivant l'avis 257-2 du CCIR.

Selon un second aspect, la présente invention concerne un relais d'un système professionnel de radiocommunications, comportant un module de traitement numérique, adapté à mettre en oeuvre un mode de fonctionnement numérique, dans lequel ledit relais échange des signaux numériques avec un ou des terminaux numériques, et un module de traitement analogique, adapté à mettre en oeuvre un mode de fonctionnement analogique dans lequel ledit relais échange des signaux analogiques avec un ou des terminaux analogiques. En outre, le relais est configuré pour utiliser par défaut le mode de fonctionnement numérique, et comporte :
- des moyens de rechercher de façon récurrente une activité analogique d'au moins un terminal analogique, lorsque ledit relais est en mode de fonctionnement numérique,
- des moyens de basculer le relais dans le mode de fonctionnement analogique lorsqu'une activité analogique a été détectée,
- des moyens d'interrompre le mode de fonctionnement numérique tant que le relais est en mode de fonctionnement analogique,
- des moyens de retourner au mode de fonctionnement numérique lorsqu'un critère de retour est vérifié.

Suivant des modes particuliers de réalisation, le relais comporte l'une ou plusieurs des caractéristiques suivantes, prises isolément ou suivant toutes les combinaisons techniquement possibles :
- le critère de retour est vérifié lorsqu'un critère d'inactivité analogique est vérifié et/ou lorsqu'une durée prédéfinie maximale d'interruption du mode de fonctionnement numérique est écoulée,
- les moyens d'interrompre le mode de fonctionnement numérique sont configurés pour informer les terminaux numériques de l'interruption du mode de fonctionnement numérique,
- les moyens d'interrompre le mode de fonctionnement numérique sont configurés pour interrompre la diffusion d'une voie balise du mode de fonctionnement numérique,
- le relais comporte des moyens de rechercher une activité numérique d'au moins un terminal numérique, et les moyens de rechercher une activité analogique n'utilisent que des signaux mesurés dans un ou des intervalles de temps pour lesquels une activité numérique n'a pas été détectée.

La présente invention concerne également un produit programme d'ordinateur, comportant un ensemble d'instructions de code de programme adaptées à la mise en oeuvre d'un procédé selon l'invention, lorsque ces instructions sont exécutées par un relais selon l'invention.

L'invention sera mieux comprise à la lecture de la description suivante, donnée à titre d'exemple nullement limitatif, et faite en se référant aux figures qui représentent :
- Figure 1 : une représentation schématique d'un système de radiocommunications comportant un relais, des terminaux numériques et des terminaux analogiques,
- Figure 2 : un diagramme illustrant le principe général d'un procédé de fonctionnement d'un relais selon l'invention,
- Figures 3a, 3b et 3c : des diagrammes temporels illustrant des exemples de critères de retour à un mode analogique,
- Figure 4 : un diagramme illustrant un mode particulier de mise en oeuvre d'un procédé de fonctionnement selon l'invention,
- Figures 5a et 5b : des diagrammes temporels illustrant des exemples d'intervalles de recherche pouvant être utilisés pour détecter une activité analogique.

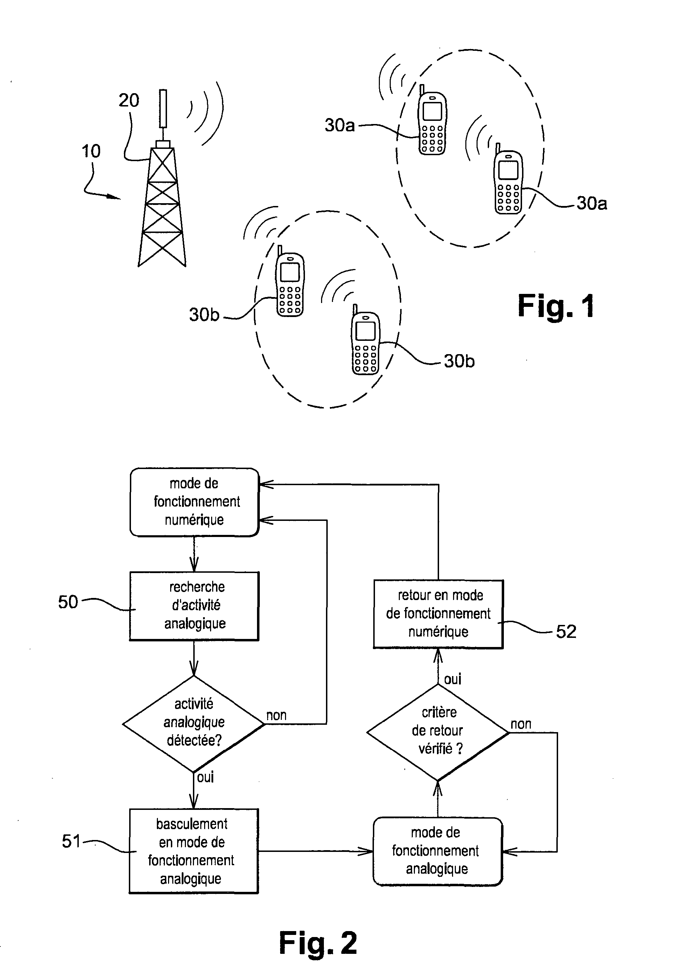

La figure 1 représente un système 10 professionnel de radiocommunications comportant au moins un relais 20, un ou des terminaux numériques 30a, et un ou des terminaux analogiques 30b.

La présente invention trouve une application particulièrement avantageuse dans la gestion de la coexistence de terminaux numériques 30a et analogiques 30b dans un même canal fréquentiel, ou dans des canaux différents mais se recouvrant au moins partiellement (par exemple des canaux de largeurs différentes, tels qu'un canal fréquentiel de 12,5 kHz de largeur et un canal fréquentiel de 6,25 kHz de largeur).

Rien n'exclut d'appliquer l'invention à la coexistence de terminaux numériques 30a et analogiques 30b dans des canaux fréquentiels différents, ne se recouvrant pas, mais on comprend que l'utilisation de tels canaux fréquentiels est en soi une façon de gérer la coexistence desdits terminaux.

La présente invention est en outre applicable à toute bande de fréquences, notamment les bandes de fréquences aux alentours de 40 MHz, 80 MHz, 160 MHz et 400 MHz.

Le relais 20 est adapté à fonctionner suivant au moins deux modes de fonctionnement : un mode de fonctionnement numérique, dans lequel le relais 20 échange des signaux numériques avec un ou des terminaux numériques 30a, et un mode de fonctionnement analogique, dans lequel le relais 20 échange des signaux analogiques avec un ou des terminaux analogiques 30b.

Par « signal analogique », on entend un signal radiofréquences mis en forme suivant un protocole de radiocommunications analogique (CCIR, CTCSS, ou tout autre protocole de radiocommunications analogique).

Par « signal numérique », on entend un signal radiofréquences mis en forme suivant un protocole de radiocommunications numérique (TETRA, dPMR, DMR, eDMR (marque déposée), ou tout autre protocole de radiocommunications numérique).

Il est à noter qu'il existe également des protocoles de radiocommunications hybrides, à la fois analogiques et numériques (MPT1327, MDC1200, BIIS1200, etc.). De tels protocoles peuvent également être considérés et rentrent, au sens de l'invention, dans la catégorie des protocoles de radiocommunications analogiques.

La figure 2 représente schématiquement le principe général du procédé de fonctionnement du relais 20. Le relais 20 utilise par défaut le mode de fonctionnement numérique, et ledit procédé comporte les étapes suivantes :
- une étape 50 récurrente de recherche d'activité analogique d'au moins un terminal analogique 30b, lorsque le relais 20 est en mode de fonctionnement numérique,
- une étape 51 de basculement dans le mode de fonctionnement analogique, exécutée lorsqu'une activité analogique a été détectée, le mode de fonctionnement numérique étant interrompu tant que le relais est en mode de fonctionnement analogique,
- une étape 52 de retour au mode de fonctionnement numérique, lorsqu'un critère de retour est vérifié.

On comprend que la coexistence entre les terminaux numériques 30a et les terminaux analogiques 30b est assurée par un multiplexage dans le temps des modes de fonctionnement numérique et analogique.

Du fait que le mode de fonctionnement numérique est utilisé par défaut, les terminaux numériques 30a ont un accès privilégié au relais 20. Ceci est avantageux dans la mesure où, lorsqu'aucun terminal analogique 30b n'est présent, la mise en oeuvre du procédé de fonctionnement est transparente pour les terminaux numériques 30a. En outre, il ne sera pas nécessaire de reconfigurer le relais 20 lorsque le système 10 de radiocommunications ne comportera plus de terminaux analogiques 30b.

Les protocoles de radiocommunications numériques actuels prévoient généralement la diffusion, par le relais 20, d'informations de contrôle dites « voie balise ». Cette voie balise est utilisée par le relais 20 pour indiquer sa présence aux terminaux numériques 30a, et également pour indiquer auxdits terminaux numériques des informations utiles pour accéder au canal fréquentiel (par exemple des informations de synchronisation).

Si la diffusion d'une voie balise est prévue, celle-ci est émise par le relais 20 lorsqu'il utilise le mode fonctionnement numérique.

Au cours de l'étape 50 de recherche d'activité analogique, on évalue, en fonction de signaux mesurés au niveau d'une antenne du relais 20, si un terminal analogique 30b est en train d'émettre un signal analogique.

L'étape 50 de recherche d'activité analogique est exécutée de façon récurrente. Par « récurrente », on entend que l'étape 50 de recherche d'activité analogique est exécutée régulièrement, tant qu'une activité analogique n'a pas été détectée, pour vérifier si une activité analogique est apparue depuis l'exécution précédente. L'étape 50 de recherche d'activité analogique est par exemple exécutée de façon sensiblement périodique, en continu, etc.

Une activité analogique est par exemple détectée si les signaux reçus présentent des caractéristiques de signaux analogiques. Les caractéristiques de signaux analogiques dépendent du protocole de radiocommunications analogique implémenté dans le relais 20.

Par exemple dans le cas de l'avis 257-2 du CCIR (maintenant IUT-R), les signaux analogiques sont constitués de séquences de cinq tonalités (une tonalité étant un signal sensiblement sinusoïdal, caractérisé par sa fréquence principale). Une tonalité représente un chiffre, et une tonalité spécifique est définie dans le cas de deux chiffres consécutifs identiques, de sorte que deux tonalités consécutives d'une même séquence sont toujours de fréquences principales différentes. En général, la durée d'une tonalité est de l'ordre de 100 millisecondes (ms), la durée d'un silence entre deux tonalités consécutives d'une séquence est de l'ordre de 7,5 ms, l'espacement dans le temps de deux séquences est généralement de l'ordre de 350 ms.

Les caractéristiques de signaux analogiques dans le cas de l'avis 257-2 du CCIR sont par exemple : les fréquences possibles pour les différentes tonalités, la durée d'une tonalité, la durée d'un silence entre deux tonalités, le nombre de tonalités d'une séquence, la durée d'une séquence, etc.

Si les caractéristiques des signaux reçus sont compatibles avec celles d'une séquence de cinq tonalités, une activité analogique est détectée.

On comprend que les principes exposés ci-dessus ne sont pas limités aux séquences de cinq tonalités au sens de l'avis 257-2 du CCIR, mais s'étendent au contraire à tout type de signal analogique pouvant être défini dans un protocole de radiocommunications analogique implémenté dans le relais 20.

Lorsqu'une activité analogique a été détectée, le relais 20 met en oeuvre l'étape 51 de basculement, et bascule dans le mode de fonctionnement analogique. Tant que le relais 20 est en mode de fonctionnement analogique, le mode de fonctionnement numérique est interrompu, c'est-à-dire que ledit relais cesse d'échanger des signaux numériques avec des terminaux numériques 30a. Avantageusement, le relais 20 n'effectue pas de recherche d'activité numérique lorsqu'il est en mode de fonctionnement analogique, de sorte que ledit relais traite tous les signaux radiofréquences reçus comme étant des signaux analogiques émis par des terminaux analogiques 30b.

De préférence, au cours de l'étape 51 de basculement, le relais 20 informe les terminaux numériques 30a d'une interruption immédiate ou imminente du mode de fonctionnement numérique, en transmettant un signal d'interruption pouvant prendre toute forme adaptée. Un terminal numérique 30a informé de cette interruption pourra arrêter d'émettre des signaux numériques au moins temporairement, de sorte que les risques de collisions entre signaux numériques et signaux analogiques seront réduits.

De préférence, le signal d'interruption comporte un champ indiquant un motif d'interruption. Ceci est avantageux pour diverses raisons. Tout d'abord, il peut permettre au terminal numérique 30a d'informer l'utilisateur dudit motif d'interruption. De plus, si le terminal numérique 30a est également adapté à utiliser le mode de fonctionnement analogique, il peut également basculer dans ledit mode de fonctionnement analogique.

Si le relais 20 diffuse une voie balise lorsqu'il utilise le mode de fonctionnement numérique, cette diffusion est de préférence interrompue au cours de l'étape 51 de basculement, par exemple tant que le mode fonctionnement analogique est utilisé. Sans cette voie balise, les terminaux numériques 30a ne pourront pas communiquer avec le relais 20, de sorte que les risques de collisions entre signaux numériques et signaux analogiques seront réduits. Un terminal numérique 30a pourra par exemple arrêter d'émettre des signaux numériques tant que la voie balise ne sera pas reçue.

L'étape 52 de retour au mode de fonctionnement numérique est exécutée lorsqu'un critère de retour est vérifié.

De préférence, ledit critère de retour est vérifié lorsqu'un critère d'inactivité analogique est vérifié et/ou après expiration d'une durée maximale d'interruption du fonctionnement suivant le mode numérique.

De préférence, l'étape 52 de retour au mode de fonctionnement numérique est exécutée uniquement lorsque le critère d'inactivité analogique est vérifié et/ou après expiration de la durée maximale d'interruption du fonctionnement suivant le mode numérique.

Le critère d'inactivité analogique est par exemple vérifié lorsqu'aucun signal analogique n'a été reçu par le relais 20 pendant une durée prédéfinie, dite « durée maximale d'inactivité analogique », de préférence comprise entre 30 secondes et 1 minute.

Suivant un exemple non limitatif, ladite durée maximale d'inactivité analogique se décompose elle-même en une première durée et une seconde durée :
- une première durée à l'expiration de laquelle, si le relais 20 ne détecte pas de signaux analogiques à retransmettre, il cesse les retransmissions, à des fins principalement d'économiser ses ressources énergétiques (par exemple en mettant l'amplificateur de puissance en veille),
- une seconde durée, qui démarre à l'expiration de la première durée, à l'expiration de laquelle, si le relais 20 ne détecte pas de signaux analogiques à retransmettre, il retourne au mode de fonctionnement numérique.

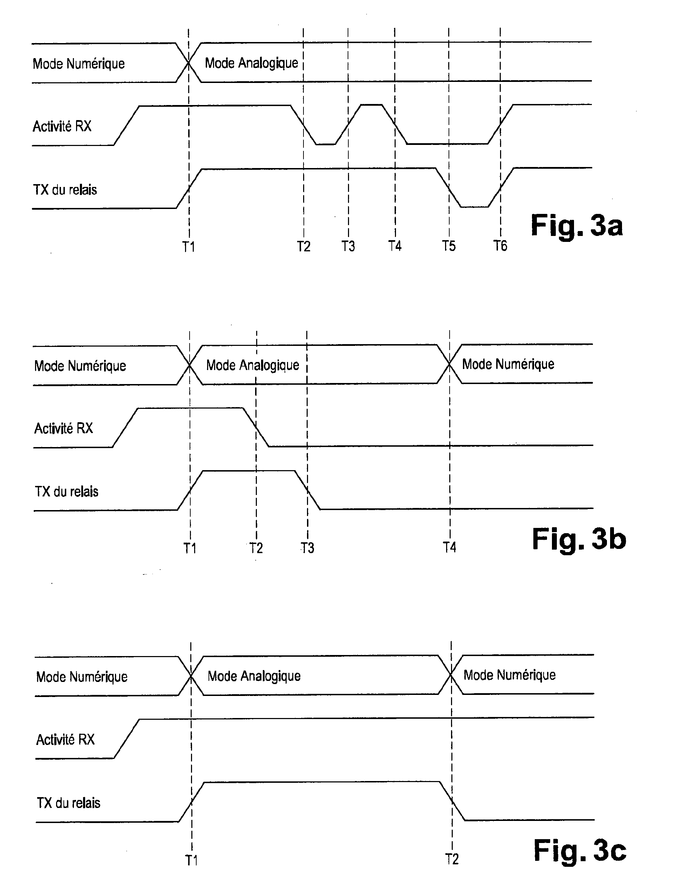

Les figures 3a et 3b illustrent l'utilisation respectivement de la première durée et de la seconde durée. Sur ces figures, on désigne par « Activité RX » une activité analogique, et par « TX du relais » les retransmissions de signaux analogiques par le relais 20.

Sur la figure 3a, on distingue principalement six temps T1 à T6 :
- temps T1 : le relais 20 détecte une activité analogique et exécute l'étape 51 de basculement en mode de fonctionnement analogique,
- temps T2 : l'activité analogique s'arrête et le relais 20 démarre le décompte de la première durée,
- temps T3 : l'activité analogique reprend, le décompte de la première durée est arrêté,
- temps T4 : l'activité analogique s'arrête et le relais 20 démarre à nouveau le décompte de la première durée,
- temps T5 : la première durée est expirée, les retransmissions de signaux analogiques par le relais 20 sont arrêtées,
- temps T6 : l'activité analogique reprend ; les retransmissions de signaux analogiques sont reprises.

Sur la figure 3b, on distingue principalement quatre temps T1 à T4 :
- temps T1 : le relais 20 détecte une activité analogique et exécute l'étape 51 de basculement en mode de fonctionnement analogique,
- temps T2 : l'activité analogique s'arrête et le relais 20 démarre le décompte de la première durée,
- temps T3 : la première durée est expirée, les retransmissions de signaux analogiques par le relais 20 sont arrêtées, le relais 20 démarre le décompte de la seconde durée,
- temps T4 : la seconde durée est expirée, le relais 20 exécute l'étape 52 de retour en mode fonctionnement numérique.

Alternativement au critère d'inactivité analogique, ou en combinaison avec ledit critère d'inactivité analogique, le retour au mode de fonctionnement numérique est effectué d'office à l'expiration d'une durée prédéfinie maximale d'interruption du mode de fonctionnement numérique.

La figure 3c illustre l'utilisation de la durée d'interruption maximale du mode de fonctionnement numérique. On y distingue principalement deux temps T1 et T2 :
- temps T1 : le relais 20 détecte une activité analogique, exécute l'étape 51 de basculement en mode de fonctionnement analogique, et démarre le décompte de la durée d'interruption maximale,
- temps T2 : la durée d'interruption maximale est expirée, le relais 20 exécute l'étape 52 de retour en mode fonctionnement numérique.

Ainsi, tel que décrit précédemment, le relais 20 utilise par défaut le mode de fonctionnement numérique, et il est avantageux d'assurer que l'interruption de ce fonctionnement soit bornée dans le temps, indépendamment de l'activité analogique, afin d'assurer à nouveau une disponibilité du relais 20 pour les terminaux numériques 30a.

La durée maximale d'interruption est avantageuse du fait que le relais 20 peut confondre un signal analogique avec du bruit présent à l'antenne du relais 20, auquel cas un critère d'inactivité analogique ne serait pas vérifié, alors qu'en réalité aucun terminal analogique 30b n'a émis de signal analogique. La durée prédéfinie maximale d'interruption est par exemple comprise entre 1 minute et 5 minutes.

Dans un mode particulier de mise en oeuvre, compatible avec l'un quelconque des modes décrits précédemment, l'exécution de l'étape 50 de recherche d'activité analogique peut être interrompue, après l'exécution de l'étape 52 de retour, pendant une durée prédéfinie, dite « durée minimale d'exécution du mode de fonctionnement numérique ».

La durée minimale d'exécution du mode de fonctionnement numérique est avantageuse afin d'éviter de rebasculer trop rapidement dans le mode de fonctionnement analogique. De plus, l'exécution de l'étape 50 de recherche d'activité analogique étant interrompue, les traitements à effectuer simultanément sont temporairement réduits.

Au cours de l'étape 52 de retour à un fonctionnement suivant le mode numérique, le relais 20 redémarre la diffusion de la voie balise, si celle-ci a été interrompue au cours de l'étape 51 de basculement.

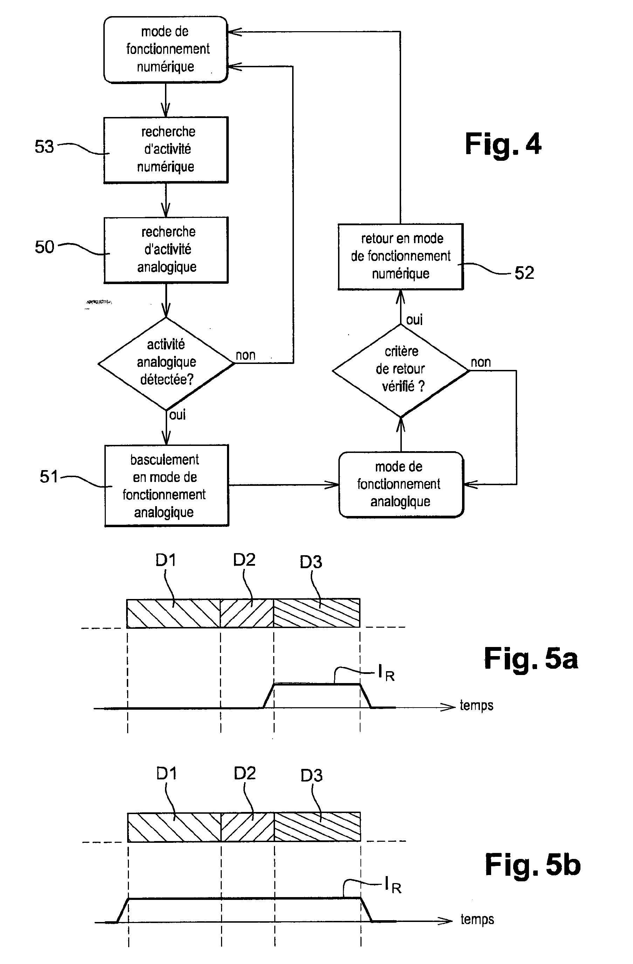

La figure 4 représente un mode préféré de mise en oeuvre du procédé de fonctionnement du relais 20, dans lequel ledit procédé comporte une étape 53 de recherche d'activité numérique, d'au moins un terminal numérique 30a, dans des signaux mesurés par le relais 20, et l'étape 50 de recherche d'activité analogique n'est exécutée que pour des signaux mesurés pour lesquels on n'a pas détecté d'activité numérique.

L'étape 53 de recherche d'activité numérique n'est pas exécutée lorsque le relais 20 est dans le mode de fonctionnement analogique, le mode de fonctionnement numérique étant interrompu.

Ce mode de mise en oeuvre est avantageux du fait que les signaux numériques, tels qu'ils sont définis par exemple dans la norme DMR, peuvent parfois être sensiblement sinusoïdaux, et être confondus avec des signaux analogiques, tels que des tonalités au sens de l'avis 257-2 du CCIR.

De tels signaux numériques peuvent donc conduire à une détection erronée d'activité analogique, qui serait préjudiciable pour les performances du système 10 professionnel de radiocommunications puisque le relais 20 pourrait basculer en mode de fonctionnement analogique même en l'absence de terminal analogique 30b.

De tels signaux numériques peuvent également conduire à ne pas détecter la présence d'un terminal analogique 30b. Par exemple, de tels signaux numériques pourraient être confondus avec des tonalités au sens de l'avis 257-2 du CCIR. Une séquence de cinq tonalités, effectivement émise par un terminal analogique 30b, serait alors perturbée par des tonalités parasites (du fait des signaux numériques), et pourrait ne pas être détectée par le relais 20 car le séquencement estimé et le nombre estimé des tonalités dans le signal mesuré ne seraient pas considérés par le relais 20 comme étant ceux d'une séquence de cinq tonalités.

On comprend que, l'étape 50 de recherche d'activité analogique n'étant exécutée qu'en considérant des signaux mesurés pour lesquels aucune activité numérique n'a été détectée au cours de l'étape 53, on réduit la probabilité de détection erronée en l'absence de signaux analogiques, et on augmente la probabilité de détection en présence d'un signal analogique.

On décrit à présent les étapes 53 de recherche d'activité numérique et 50 de recherche d'activité analogique en référence aux figures 5a et 5b, dans le cas d'un protocole de radiocommunications numérique basé sur un multiplexage temporel des utilisateurs (ou TDMA de l'anglais « Time Division Multiple Access »). Dans de tels protocoles, un canal fréquentiel est généralement organisé dans le temps suivant une trame sensiblement périodique, divisée en plusieurs intervalles de temps distincts, dits « slots », chaque slot pouvant être utilisé par un terminal numérique 30a. La position dans le temps des slots est connue ou déterminable, mais on ne sait pas nécessairement à l'avance si un slot va être utilisé par un terminal numérique.

Les figures 5a et 5b représentent des exemples dans le cas d'un slot tel que défini dans la norme DMR. Un tel slot se décompose en trois parties :
- une première partie D1 et une troisième partie D3 qui, lorsque le slot est utilisé, sont occupées par des données utilisateur,
- une seconde partie D2, intercalée entre lesdites première et seconde parties, qui, lorsque le slot est utilisé, est occupé par des informations de contrôle, par exemple une séquence de synchronisation.

L'étape 53 de recherche d'activité numérique est de préférence exécutée sur les signaux mesurés au cours de la seconde partie D2, du fait de la présence possible d'une séquence de synchronisation qui, du fait qu'elle est connue a priori, est plus simple à détecter.

Si on détecte une activité numérique au cours d'un slot d'indice N, aucun signal mesuré au cours de ce slot ne sera considéré au cours de l'étape 50 de recherche d'activité analogique.

Si, au contraire, on ne détecte pas d'activité numérique au cours d'un slot d'indice N, plusieurs intervalles de signaux mesurés pourront être considérés au cours de l'étape 50 de recherche d'activité analogique.

La figure 5a illustre le cas où seuls des signaux mesurés après la fin de l'exécution de l'étape 53 sont considérés pour la recherche d'activité analogique. Ce point est illustré dans la figure 5a par la courbe inférieure, dont le niveau haut représente un intervalle considéré au cours de l'étape 50 (désigné par « I_{R} » sur la figure 5a, correspondant sensiblement à la partie D3). A contrario, le niveau bas représente un intervalle dans lequel les signaux mesurés ne sont pas conservés.

Suivant un autre exemple, illustré par la figure 5b, il est possible de mémoriser au fur et à mesure les signaux mesurés dans un slot. Ainsi, au cours de l'étape 50 de recherche d'activité analogique, on pourra considérer des signaux mesurés préalablement à la fin de l'exécution de l'étape 53, si aucune activité numérique n'a été détectée. Tel que représenté sur la figure 5b, on conserve par exemple un intervalle I_{R} correspondant à l'intégralité du slot.

D'autres exemples sont possibles, et on comprend qu'on va considérer, au cours de l'étape 50 de recherche d'activité analogique, des signaux mesurés au cours d'intervalles, dits « intervalles de recherche » I_{R}, dont la durée dépend de l'implémentation choisie, un choix particulier de durée d'intervalle de recherche n'étant qu'une variante d'implémentation du procédé.

Il est à noter qu'il est généralement prévu un intervalle, dit « intervalle de garde », entre les slots, afin d'éviter des collisions entre des signaux numériques émis par des terminaux numériques 30a différents (du fait notamment de différences de temps de propagation et d'erreurs de synchronisation). Les intervalles de recherche peuvent également comprendre des signaux mesurés au cours de ces intervalles de garde.

Les principes décrits précédemment, en référence aux figures 5a et 5b, ne sont pas limités à la norme DMR, mais s'étendent au contraire à tout autre type de protocole de radiocommunications numérique.

Dans un mode particulier de mise en oeuvre du procédé de fonctionnement du relais 20, on considère au cours de l'étape 50 de recherche des informations déterminées d'après des signaux mesurés au cours de tous les intervalles de recherche compris dans une fenêtre temporelle, dite « fenêtre de recherche », dont la durée est prédéfinie en fonction de paramètres du protocole de radiocommunications analogique supporté par le relais 20.

Par exemple, si on considère la durée d'un slot DMR, qui est de l'ordre de 30 ms, et une séquence de cinq tonalités suivant l'avis 257-2 du CCIR, dont la durée est comprise entre 500 ms et 600 ms, on comprend qu'un intervalle de recherche, dont la durée est généralement égale ou inférieure à celle d'un slot (aux intervalles de garde près), sera insuffisant pour détecter une séquence de cinq tonalités.

En considérant des intervalles de recherche compris dans une fenêtre de recherche dont la durée dépend du protocole de radiocommunications analogique (par exemple sensiblement égale ou supérieure à 500 ms dans le cas d'une séquence de cinq tonalités), la recherche d'activité analogique est mieux adaptée au protocole analogique considéré.

La fenêtre de recherche est de préférence une fenêtre glissante, c'est-à-dire que les informations (déterminées d'après les signaux mesurés au cours d'intervalles de recherche) les plus anciennes ne sont plus considérées à mesure que de nouvelles informations sont déterminées.

On comprend qu'on ne dispose en général pas d'informations en continu sur l'intégralité de la fenêtre de recherche, mais uniquement sur les intervalles de recherche compris dans la fenêtre de décision glissante en cours. En d'autres termes, on dispose, dans une fenêtre de recherche, d'intervalles de recherche séparés par des silences qui correspondent à des intervalles de temps non retenus du fait d'une détection d'activité numérique.

Les informations sur chacun des intervalles de recherche correspondent notamment aux instants de début et de fin de chacun de ces intervalles de recherche.

Dans le cas d'une séquence de cinq tonalités, les informations dépendent de la position dans le temps de l'intervalle de recherche par rapport à ladite séquence de cinq tonalités. Les signaux mesurés dans un intervalle de recherche peuvent correspondre à :
- une tonalité de la séquence : dans ce cas, les informations comprennent la fréquence estimée de la tonalité,
- une tonalité de la séquence et un silence, le silence correspondant à un silence entre deux tonalités consécutives ou un silence antérieur ou postérieur à ladite séquence : dans ce cas, les informations comprennent la fréquence estimée de la tonalité, et l'instant estimé de transition entre la tonalité et le silence,
- deux tonalités séparées par un silence : dans ce cas, les informations comprennent les fréquences estimées des deux tonalités, et les instants estimés de transition entre la première tonalité et le silence, et entre le silence et la seconde tonalité.

En fonction des informations déterminées d'après les signaux mesurés dans les intervalles de recherche d'une fenêtre de recherche, le relais 20 peut vérifier si celles-ci peuvent correspondre à un signal analogique, compte tenu de la connaissance a priori dont dispose le relais 20 sur lesdits signaux analogiques (dans le cas d'une séquence à cinq tonalités : fréquences possibles des tonalités, durée des tonalités, durée des silences entre tonalités, durée des silences entre séquences de tonalités, tonalités consécutives nécessairement différentes, etc.).

Par exemple, dans le cas d'une séquence à cinq tonalités, si lesdites informations indiquent qu'on aurait deux tonalités consécutives de même fréquence, le relais 20 décidera qu'il n'y a pas d'activité analogique car les informations sont incompatibles avec le type de signal analogique recherché. Si lesdites informations indiquent qu'une tonalité aurait une durée inférieure à 50 ms, de la même manière le relais 20 décidera qu'il n'y a pas d'activité analogique, etc.

L'utilisation d'une fenêtre de recherche est également avantageuse pour limiter les détections erronées de signaux analogiques, liées à des interférences intra-canal fréquentiel. De telles interférences sont liées au fait que les signaux radiofréquences peuvent se propager sur des distances importantes : le relais 20 peut donc recevoir des signaux analogiques, émis dans un canal fréquentiel exploité par ledit relais, mais destinés à un autre relais distant. En se basant sur les informations déterminées par exemple d'après un seul intervalle de recherche, le relais 20 pourrait basculer en mode de fonctionnement analogique du fait de ces interférences intra-canal fréquentiel. Du fait de l'utilisation de la fenêtre de recherche, ce type d'erreurs de détection pourra être réduit.

La présente invention concerne également un relais 20 adapté à fonctionner suivant l'un quelconque des modes de mise en oeuvre du procédé.

Le relais 20 comporte au moins une antenne couplée à un module radiofréquences. Le module radiofréquences est adapté d'une part à traiter des signaux radiofréquences émis par des terminaux numériques 30a ou analogiques 30b et reçus par l'antenne, et d'autre part à former des signaux radiofréquences à émettre par l'antenne en direction de terminaux numériques 30a ou analogiques 30b.

Le relais 20 comporte également un module de traitement numérique et un module de traitement analogique, couplés à l'antenne via le module radiofréquences. Suivant d'autres exemples, le relais 20 comporte une antenne et/ou un module radiofréquences pour chaque module de traitement (numérique ou analogique).

Le module de traitement numérique est adapté à mettre en oeuvre le mode de fonctionnement numérique, et le module de traitement analogique est adapté à mettre en oeuvre le mode de fonctionnement analogique.

Le relais 20 met en oeuvre un procédé de fonctionnement selon l'un quelconque des modes décrits précédemment.

Le relais 20 est configuré pour utiliser par défaut le mode de fonctionnement numérique, et ledit relais comporte des moyens de mettre en oeuvre les différentes étapes du procédé de fonctionnement. En particulier, le relais 20 comporte des moyens de rechercher une activité analogique, des moyens de basculer en mode de fonctionnement analogique, des moyens d'interrompre le mode de fonctionnement numérique tant le relais 20 est en mode de fonctionnement analogique, et des moyens de retourner au mode de fonctionnement numérique lorsque le critère de retour est vérifié.

Suivant un mode préféré de réalisation, le relais 20 comporte également des moyens de rechercher une activité numérique, et les moyens de rechercher une activité analogique n'utilisent que des signaux mesurés dans des intervalles de recherche pour lesquels une activité numérique n'a pas été détectée.

Selon un mode particulier de réalisation du relais 20, il comporte un ou plusieurs microcontrôleurs et/ou microprocesseurs, reliés à des mémoires informatiques (disque dur magnétique, mémoire flash, disque optique, etc.) dans lesquelles est mémorisé un produit programme d'ordinateur, sous la forme d'un ensemble d'instructions de code à exécuter pour mettre en oeuvre les fonctions des moyens de rechercher une activité analogique, des moyens de basculer dans le mode de fonctionnement analogique et d'interrompre le mode de fonctionnement numérique, des moyens de retourner en mode de fonctionnement numérique et, le cas échéant, des moyens de rechercher une activité numérique.

Suivant certains modes de réalisation du relais 20, il comporte également un ou des circuits intégrés, de type ASIC, FPGA, etc., adaptés à mettre en oeuvre tout ou partie des fonctions desdits moyens susmentionnés.

La présente invention trouve une application particulièrement avantageuse dans les systèmes professionnels de radiocommunications comportant une pluralité de terminaux utilisateurs, dont certains mettent en oeuvre un protocole numérique et certains mettent en oeuvre un protocole analogique. L'invention gère cette coexistence sans que les performances du système ne soient dégradées en l'absence de terminaux analogiques. En outre, l'invention permet de réduire les collisions entre signaux analogiques et signaux numériques.

## Revendications

1. Procédé de fonctionnement d'un relais (20) d'un système (10) professionnel de radiocommunications, ledit relais étant adapté à fonctionner selon deux modes, un mode de fonctionnement numérique, dans lequel ledit relais échange des signaux numériques avec un ou des terminaux numériques (30a), et un mode de fonctionnement analogique dans lequel ledit relais échange des signaux analogiques avec un ou des terminaux analogiques (30b), **caractérisé en ce que** le mode de fonctionnement numérique est utilisé par défaut, et **en ce qu'**il comporte :
- une étape (50) récurrente de recherche d'activité analogique d'au moins un terminal analogique (30b), exécutée lorsque le relais (20) est en mode de fonctionnement numérique,
- une étape (51) de basculement dans le mode de fonctionnement analogique, exécutée lorsqu'une activité analogique a été détectée, le mode de fonctionnement numérique étant interrompu tant que le relais (20) est en mode de fonctionnement analogique,
- une étape (52) de retour au mode de fonctionnement numérique, exécutée lorsqu'un critère d'inactivité analogique est vérifié et/ou lorsqu'une durée prédéfinie maximale d'interruption du mode de fonctionnement numérique est écoulée.

2. Procédé selon la revendication 1, dans lequel, au cours de l'étape (51) de basculement, le relais (20) informe les terminaux numériques (30a) de l'interruption du mode de fonctionnement numérique.

3. Procédé selon l'une des revendications 1 à 2, dans lequel le relais (20) interrompt la diffusion d'une voie balise du mode de fonctionnement numérique tant que le relais est en mode de fonctionnement analogique.

4. Procédé selon l'une des revendications précédentes, dans lequel le critère d'inactivité analogique est vérifié lorsqu'aucun signal analogique n'a été détecté pendant une durée prédéfinie maximale d'inactivité analogique.

5. Procédé selon la revendication 4, dans lequel la durée prédéfinie maximale d'inactivité analogique se décompose en une première durée, à l'expiration de laquelle le relais (20) interrompt les retransmissions de signaux analogiques, et une seconde durée, à l'expiration de laquelle le relais (20) exécute l'étape (52) de retour au mode de fonctionnement numérique.

6. Procédé selon l'une des revendications précédentes, dans lequel, suite à l'exécution de l'étape (52) de retour au mode de fonctionnement numérique, l'exécution de l'étape (50) de recherche d'activité analogique est interrompue pendant une durée prédéfinie minimale d'exécution du mode de fonctionnement numérique.

7. Procédé selon l'une des revendications précédentes, comportant une étape (53) récurrente de recherche d'activité numérique d'au moins un terminal numérique (30a), et dans lequel on ne considère au cours de l'étape (50) de recherche d'activité analogique que des signaux mesurés dans un ou des intervalles de temps, dits « intervalles de recherche » (I_{R}), pour lesquels une activité numérique n'a pas été détectée.

8. Procédé selon la revendication 7, dans lequel, les terminaux numériques (30a) étant multiplexés dans le temps et utilisant des intervalles de temps distincts, dits « slots », lequel l'étape (53) de recherche d'activité numérique est exécutée pour chaque slot.

9. Procédé selon l'une des revendications 7 à 8, dans lequel, au cours de l'étape (50) de recherche d'activité analogique, une activité analogique est recherchée dans des signaux mesurés dans des intervalles de recherche (I_{R}) compris dans une fenêtre temporelle glissante, dite « fenêtre de recherche », dont la durée est prédéfinie en fonction de paramètres du mode de fonctionnement analogique.

10. Procédé selon la revendication 9, dans lequel la durée de la fenêtre de recherche est adaptée à permettre la détection d'une séquence de cinq tonalités suivant l'avis 257-2 du CCIR.

11. Relais (20) d'un système (10) professionnel de radiocommunications, comportant un module de traitement numérique, adapté à mettre en oeuvre un mode de fonctionnement numérique, dans lequel ledit relais échange des signaux numériques avec un ou des terminaux numériques (30a), et un module de traitement analogique, adapté à mettre en oeuvre un mode de fonctionnement analogique dans lequel ledit relais échange des signaux analogiques avec un ou des terminaux analogiques (30b), **caractérisé en ce que** le relais (20) est configuré pour utiliser par défaut le mode de fonctionnement numérique, et **en ce qu'**il comporte :
- des moyens de rechercher de façon récurrente une activité analogique d'au moins un terminal analogique (30b), lorsque ledit relais (20) est en mode de fonctionnement numérique,
- des moyens de basculer le relais dans le mode de fonctionnement analogique lorsqu'une activité analogique a été détectée,
- des moyens d'interrompre le mode de fonctionnement numérique tant que le relais (20) est en mode de fonctionnement analogique,
- des moyens de retourner au mode de fonctionnement numérique lorsqu'un critère d'inactivité analogique est vérifié et/ou lorsqu'une durée prédéfinie maximale d'interruption du mode de fonctionnement numérique est écoulée.

12. Relais (20) selon la revendication 11, dans lequel les moyens d'interrompre le mode de fonctionnement numérique sont configurés pour informer les terminaux numériques (30a) de l'interruption du mode de fonctionnement numérique.

13. Relais (20) selon l'une des revendications 11 à 12, dans lequel les moyens d'interrompre le mode de fonctionnement numérique sont configurés pour interrompre la diffusion d'une voie balise du mode de fonctionnement numérique.

14. Relais (20) selon l'une des revendications 11 à 13, comportant des moyens de rechercher une activité numérique d'au moins un terminal numérique (30a), et dans lequel les moyens de rechercher une activité analogique n'utilisent que des signaux mesurés dans un ou des intervalles de temps, dits « intervalles de recherche » (I_{R}), pour lesquels une activité numérique n'a pas été détectée.

## Patentansprüche

1. Betriebsverfahren eines Relais (20) eines professionellen Funkverkehrssystems (10), wobei das Relais geeignet ist, um gemäß zwei Betriebsarten zu arbeiten, einer digitalen Betriebsart, bei der das Relais mit einem oder mehreren digitalen Endgeräten (30a) digitale Signale austauscht, und einer analogen Betriebsart, bei der das Relais mit einem oder mehreren analogen Endgeräten (30b) analoge Signale austauscht, **dadurch gekennzeichnet, dass** die digitale Betriebsart standardmäßig verwendet wird, und dass es aufweist:
- einen wiederkehrenden Schritt (50) der Suche nach analoger Aktivität mindestens eines analogen Endgeräts (30b), der ausgeführt wird, wenn das Relais (20) in der digitalen Betriebsart ist,
- einen Schritt (51) des Umschaltens in die analoge Betriebsart, der ausgeführt wird, wenn eine analoge Aktivität erfasst wurde, wobei die digitale Betriebsart unterbrochen wird, so lange das Relais (20) in der analogen Betriebsart ist,
- einen Schritt (52) der Rückkehr in die digitale Betriebsart, der ausgeführt wird, wenn ein Kriterium analoger Inaktivität festgestellt wird und/oder wenn eine vorab definierte maximale Unterbrechungsdauer der digitalen Betriebsart abgelaufen ist.

2. Verfahren nach Anspruch 1, wobei das Relais (20) die digitalen Endgeräte (30a) während des Umschaltschritts (51) über die Unterbrechung der digitalen Betriebsart informiert.

3. Verfahren nach einem der Ansprüche 1 bis 2, wobei das Relais (20) die Aussendung eines Bakenkanals der digitalen Betriebsart unterbricht, so lange das Relais in der analogen Betriebsart ist.

4. Verfahren nach einem der vorhergehenden Ansprüche, wobei das Kriterium analoger Inaktivität festgestellt wird, wenn während einer vorab definierten maximalen Dauer analoger Inaktivität kein analoges Signal festgestellt wurde.

5. Verfahren nach Anspruch 4, wobei die vorab definierte maximale Dauer analoger Inaktivität in eine erste Dauer, nach deren Ablauf das Relais (20) die Rückübertragungen analoger Signale unterbricht, und eine zweite Dauer gegliedert ist, nach deren Ablauf das Relais (20) den Schritt (52) der Rückkehr zur digitalen Betriebsart ausführt.

6. Verfahren nach einem der vorhergehenden Ansprüche, wobei nach der Ausführung des Schritts (52) der Rückkehr in die digitale Betriebsart die Ausführung des Schritts (50) der Suche nach analoger Aktivität während einer vorab definierten minimalen Ausführungsdauer der digitalen Betriebsart unterbrochen wird.

7. Verfahren nach einem der vorhergehenden Ansprüche, das einen wiederkehrenden Schritt (53) der Suche nach digitaler Aktivität mindestens eines digitalen Endgeräts (30a) aufweist, und wobei während des Schritts (50) der Suche nach analoger Aktivität nur Signale in Betracht gezogen werden, die in einem oder mehreren Zeiträumen, « Suchzeiträume » (I_{R}) genannt, gemessen werden, für die keine digitale Aktivität erfasst wurde.

8. Verfahren nach Anspruch 7, wobei, da die digitalen Endgeräte (30a) zeitmultiplexiert sind und « Slots » genannte getrennte Zeiträume verwenden, der Schritt (53) der Suche nach digitaler Aktivität für jeden Slot ausgeführt wird.

9. Verfahren nach einem der Ansprüche 7 bis 8, wobei während des Schritts (50) der Suche nach analoger Aktivität nach einer analogen Aktivität in Signalen gesucht wird, die in Suchzeiträumen (I_{R}) gemessen werden, die in einem « Suchfenster » genannten gleitenden Zeitfenster enthalten sind, dessen Dauer abhängig von Parametern der analogen Betriebsart vorab definiert wird.

10. Verfahren nach Anspruch 9, wobei die Dauer des Suchfensters geeignet ist, um die Erfassung einer Folge von fünf Tönen gemäß der Empfehlung 257-2 des CCIR zu erlauben.

11. Relais (20) eines professionellen Funkverkehrsystems (10), das ein digitales Verarbeitungsmodul, das geeignet ist, um eine digitale Betriebsart anzuwenden, bei der das Relais mit einem oder mehreren digitalen Endgeräten (30a) digitale Signale austauscht, und ein analoges Verarbeitungsmodul aufweist, das geeignet ist, um eine analoge Betriebsart anzuwenden, bei der das Relais mit einem oder mehreren analogen Endgeräten (30b) analoge Signale austauscht,
**dadurch gekennzeichnet, dass** das Relais (20) konfiguriert ist, um standardmäßig die digitale Betriebsart zu verwenden, und dass es aufweist:
- Einrichtungen, um wiederkehrend nach einer analogen Aktivität mindestens eines analogen Endgeräts (30b) zu suchen, wenn das Relais (20) in der digitalen Betriebsart ist,
- Einrichtungen, um das Relais in die analoge Betriebsart umzuschalten, wenn eine analoge Aktivität erfasst wurde,
- Einrichtungen, um die digitale Betriebsart zu unterbrechen, so lange das Relais (20) in der analogen Betriebsart ist,
- Einrichtungen, um zur digitalen Betriebsart zurückzukehren, wenn ein Kriterium analoger Inaktivität festgestellt wird und/oder wenn eine vorab definierte maximale Unterbrechungsdauer der digitalen Betriebsart abgelaufen ist.

12. Relais (20) nach Anspruch 11, wobei die Einrichtungen zur Unterbrechung der digitalen Betriebsart konfiguriert sind, um die digitalen Endgeräte (30a) über die Unterbrechung der digitalen Betriebsart zu informieren.

13. Relais (20) nach einem der Ansprüche 11 bis 12, wobei die Einrichtungen zur Unterbrechung der digitalen Betriebsart konfiguriert sind, um die Aussendung eines Bakenkanals der digitalen Betriebsart zu unterbrechen.

14. Relais (20) nach einem der Ansprüche 11 bis 13, das Einrichtungen zur Suche nach einer digitalen Aktivität mindestens eines digitalen Endgeräts (30a) aufweist, und wobei die Einrichtungen zur Suche nach einer analogen Aktivität nur in einem oder mehreren « Suchzeiträume » (I_{R}) genannten Zeiträumen gemessene Signale verwenden, für die keine digitale Aktivität erfasst wurde.

## Claims

1. Method for operating a relay (20) of a professional radiocommunications system (10); said relay being adapted to operating in two modes, a digital operating mode, in which said relay exchanges digital signals with one or more digital terminals (30a), and an analog operating mode, in which said relay exchanges analog signals with one or more analog terminals (30b), **characterized in that** the digital operating mode is used by default, and **in that** it comprises:
- a recurring step (50) of searching for analog activity of at least one analog terminal (30b), executed when the relay (20) is in digital operating mode,
- a step (51) of switching to analog operating mode, executed when an analog activity has been detected, the digital operating mode being interrupted when the relay (20) is in analog operating mode,
- a step (52) of returning to digital operating mode, executed when an analog inactivity criterion is fulfilled and/or when a predefined maximum interruption period for digital operating mode has elapsed.

2. Method according to claim 1, wherein, during the switching step (51), the relay (20) notifies the digital terminals (30a) of the interruption of the digital operating mode.

3. Method according to one of claims 1 to 2, wherein the relay (20) interrupts the broadcasting of a broadcast channel of the digital operating mode while the relay is in the analog operating mode.

4. Method according to one of the preceding claims, wherein the analog inactivity criterion is fulfilled when no analog signal has been detected during a predefined maximum period of analog inactivity.

5. Method according to claim 4, wherein the predefined maximum period of analog inactivity is divided into a first period, at the expiry of which the relay (20) interrupts analog signals retransmissions, and a second period, at the expiry of which the relay (20) executes the step (52) of returning to digital operating mode.

6. Method according to one of the preceding claims, wherein, after executing the step (52) of returning to digital operating mode, the execution of the step (50) of searching for analog activity is interrupted during a predefined minimum execution period of the digital operating mode.

7. Method according to one of the preceding claims, comprising a recurring step (53) of searching for digital activity of at least one digital terminal (30a), and wherein during the step (50) of searching for analog activity only signals measured in one or more time intervals, referred to as "search intervals" (I_{R}), in which a digital activity has not been detected are considered.

8. Method according to claim 7, wherein, the digital terminals (30a) being multiplexed in time and using distinct time intervals, referred to as "slots", the step (53) of searching for digital activity is executed for each slot.

9. Method according to one of claims 7 to 8, wherein during the step (50) of searching for analog activity, analog activity is searched for in signals measured in search intervals (I_{R}) included in a sliding time window, called the "search window", whose duration is predefined according to parameters of the analog operating mode.

10. Method according to claim 9, wherein the search window's duration is adapted to allowing a sequence of five tones according to CCIR notice 257-2 to be detected.

11. Relay (20) for a professional radiocommunications system (10) comprising a digital processing module, adapted to implementing a digital operating mode in which said relay exchanges digital signals with one or more digital terminals (30a), and an analog processing module, adapted to implementing an analog operating mode in which said relay exchanges analog signals with one or more analog terminals (30b), **characterized in that** the relay (20) is configured to use the digital operating mode by default, and **in that** it comprises:
- means for searching in a recurring way for analog activity of at least one analog terminal (30b), when said relay (20) is in digital operating mode,
- means for switching the relay to analog operating mode when an analog activity has been detected,
- means for interrupting the digital operating mode while the relay (20) is in analog operating mode,
- means for returning to digital operating mode when an analog inactivity criterion is fulfilled and/or when a predefined maximum interruption period of the digital operating mode has elapsed.

12. Relay (20) according to claim 11, wherein the means for interrupting the digital operating mode are configured to notify the digital terminals (30a) of the interruption of the digital operating mode.

13. Relay (20) according to one of claims 11 to 12, wherein the means for interrupting digital operating mode are configured to interrupt the broadcasting of a broadcast channel of the digital operating mode.

14. Relay (20) according to one of claims 11 to 13, comprising means for searching for digital activity of at least one digital terminal (30a), and wherein the means for searching for analog activity only use signals measured in one or more time intervals, referred to as "search intervals" (I_{R}), in which a digital activity has not been detected.
